# EUROPEAN PATENT APPLICATION

(11) **EP 4 803 064 A1**
(43) Date of publication of application: **09.09.2026**
(21) Application number: 24897554.2
(22) Date of filing: 26.11.2024
(51) Int. Cl.: A61J 1/20, G01N 1/00

(54) **COLLECTION KIT**

(30) Priority: 28.11.2023 JP 2023200664
(71) Applicant: Terumo Kabushiki Kaisha, Tokyo 151-0072 (JP)
(72) Inventor: KATAGIRI, Mayu, Fujinomiya-shi, Shizuoka 418-0004 (JP)
(74) Representative: TBK
(86) International application number: PCT/JP2024/041859
(87) International publication number: WO 2025/115870

(57) **Abstract**

A collection kit (10A) includes an inflow tube (12), a plurality of inflow ports (a first inflow port (11a) and a second inflow port (11b)) connected downstream of the inflow tube (12), a collection bag (14A) in which a plurality of housing chambers (a first housing chamber (26) and a second housing chamber (28)) are formed, a plurality of outflow ports (a first outflow port (15) and a second outflow port (17)) connected to the plurality of housing chambers, respectively, and a plurality of exhaust units (a first exhaust unit (61) and a second exhaust unit (62)) connected to the plurality of housing chambers, respectively.

## Description

### Technical Field

The present invention relates to a collection kit for transferring a collection target (mainly, a liquid medicine) housed in a medical bag to a plurality of sampling containers.

### Background Art

Blood preparations include a red blood cell preparation, a plasma preparation, a platelet preparation, and a whole blood preparation. In order to ensure safety of the blood preparations, a small amount of sample may be collected to perform a culture test. In the culture test, a sample is collected in a culture bottle (sampling container), and the culture bottle is placed in an environment suitable for bacterial growth to detect the presence or absence of a pathogen.

Hereinafter, a work procedure of transferring a platelet preparation from a platelet bag to two culture bottles will be described using a medical bag (hereinafter, referred to as a platelet bag) in which a platelet preparation is housed as an example.

A small volume collection bag is connected to the platelet bag, and a part of the platelet preparation of the platelet bag is transferred to the collection bag. Thereafter, the collection bag is disconnected from the platelet bag. Next, in a clean bench, the collection bag is connected to a tube extending from a sample collection tube, and a prescribed amount of the platelet preparation is transferred from the collection bag to the sample collection tube with reference to a scale of the sample collection tube. Thereafter, two culture bottles are sequentially connected to the sample collection tube, and a prescribed amount of the platelet preparation is transferred to the two culture bottles. One of the two culture bottles is a culture bottle subjected to anaerobic culture, and the other is a culture bottle subjected to aerobic culture.

For example, US Patent No. 8777921 discloses a collection kit for collecting a sample from a medical bag.

### Citation List

### Patent Literature

Patent Literature 1: US Patent No. 8777921

### Summary of Invention

From the viewpoint of further improving the safety of blood preparations, culture tests for all blood preparations have been studied. Therefore, it is required to improve work efficiency of the culture test of the blood preparations. In a case of performing the culture test on all the blood preparations, it is desirable that an instrument for separating the blood preparation into culture bottles can be reduced in cost with a simple structure. It is desirable that a predetermined amount of the collection target can be collected in each of the plurality of sampling containers.

It is therefore an object of the present invention to solve the above-described problems.
(1) One aspect of the present invention is a collection kit for collecting a collection target housed in a medical bag into a plurality of sampling containers, the collection kit including at least one inflow tube to which the medical bag is connected, a plurality of inflow ports connected downstream of the at least one inflow tube, a collection bag connected downstream of the plurality of inflow ports, formed by stacking and welding two flexible sheets, with a plurality of housing chambers that houses the collection target formed between the two flexible sheets, a plurality of outflow ports connected to the plurality of housing chambers, respectively, that transfers the collection target from the plurality of housing chambers to the plurality of sampling containers, respectively, and a plurality of exhaust units connected to the plurality of housing chambers, respectively, for discharging air inside the plurality of housing chambers to an outside of the collection bag, in which the number of the plurality of inflow ports, the number of the plurality of housing chambers, and the number of the plurality of outflow ports are the same.
   Since the collection bag has a structure integrally formed using the two flexible sheets, the collection kit can be manufactured at a low cost. Since the collection bag includes a plurality of housing chambers and can accumulate a predetermined amount (required amount) of the collection target in the plurality of housing chambers, a predetermined amount of the collection target can be collected in each of the plurality of sampling containers.
(2) The collection kit according to (1) described above may include a plurality of adapters connected downstream of the plurality of outflow ports, respectively, and connectable to the plurality of sampling containers.
   With this configuration, since the collection kit includes a plurality of adapters in an initial state, it is possible to save time and effort to connect the plurality of adapters when using the collection kit, and to efficiently perform collection work.
(3) In the collection kit according to (1) or (2) described above, the at least one inflow tube may include one common portion to which the medical bag is connected, and a plurality of branch portions branched from the common portion and connected to the plurality of inflow ports, respectively.
   With this configuration, when the collection target is transferred from the medical bag to the collection bag, connection and separation between the medical bag and the inflow tube only need to be performed once, so that the collection work can be efficiently performed.
(4) In the collection kit according to (1) or (2) described above, the at least one inflow tube may include a plurality of inflow tubes connected to the plurality of inflow ports, respectively.
   With this configuration also, the collection target can be transferred from the medical bag to the plurality of housing chambers of the collection bag, and a predetermined amount of the collection target can be accumulated in the plurality of housing chambers.
(5) In the collection kit according to (4) described above, the collection bag may include a plurality of segments each including the plurality of housing chambers, and the plurality of segments may be separable from each other.
   Since the collection bag can be divided into a plurality of segments, it is possible to use only a necessary number of segments in a case where it is desired to collect the collection target in a smaller number of sampling containers than the number of housing chambers.
(6) In the collection kit according to any one of (1) to (5) described above, the at least one inflow tube may be disposed outside the collection bag.

According to the collection kit of the present invention, since the collection bag has a structure integrally formed using two flexible sheets, the collection kit can be manufactured at a low cost. Since the collection bag includes a plurality of housing chambers and can accumulate a predetermined amount (required amount) of the collection target in the plurality of housing chambers, a predetermined amount of the collection target can be collected in each of the plurality of sampling containers.

### Brief Description of Drawings

[Fig. 1] Fig. 1 is an overall diagram of a collection kit according to a first embodiment of the present invention.
[Fig. 2] Fig. 2 is a diagram of a state in which a collection target is collected in the collection kit according to the first embodiment of the present invention.
[Fig. 3] Fig. 3 is a diagram of a state in which the collection kit according to the first embodiment of the present invention is connected to a culture bottle.
[Fig. 4] Fig. 4 is an overall diagram of a collection kit according to a second embodiment of the present invention.
[Fig. 5] Fig. 5 is a diagram of a state in which a collection target is collected in a first housing chamber of the collection kit according to the second embodiment of the present invention.
[Fig. 6] Fig. 6 is a diagram of a state in which the collection target is collected in the first housing chamber and a second housing chamber of the collection kit according to the second embodiment of the present invention.
[Fig. 7] Fig. 7 is a diagram of a state in which the collection kit according to the second embodiment of the present invention is connected to a culture bottle.
[Fig. 8] Fig. 8 is a diagram for describing another method of using the collection kit according to the second embodiment of the present invention.

### Description of Embodiments

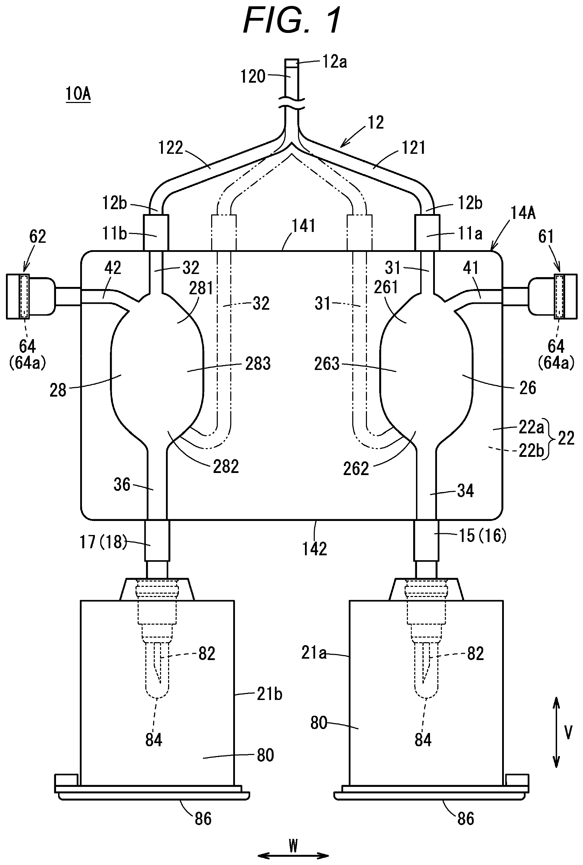

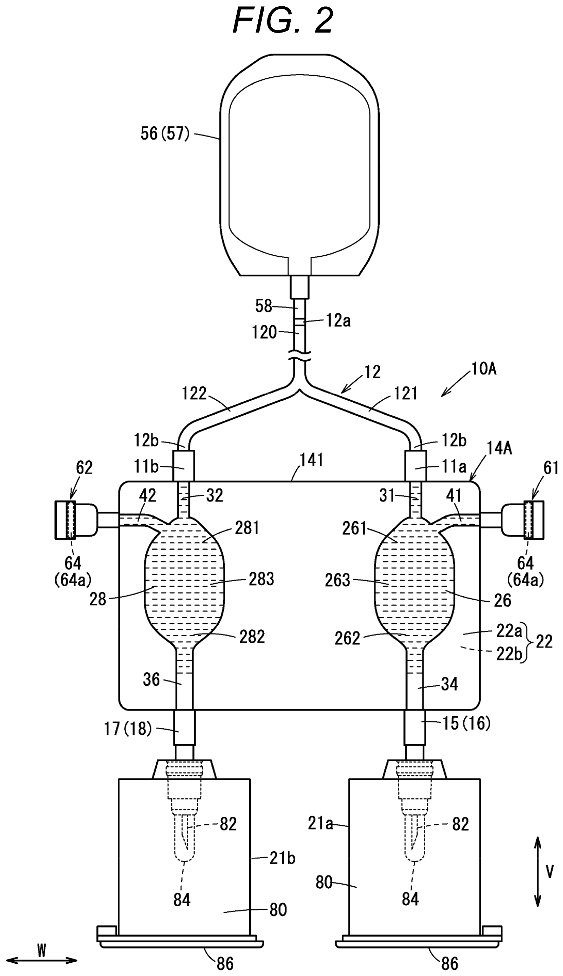

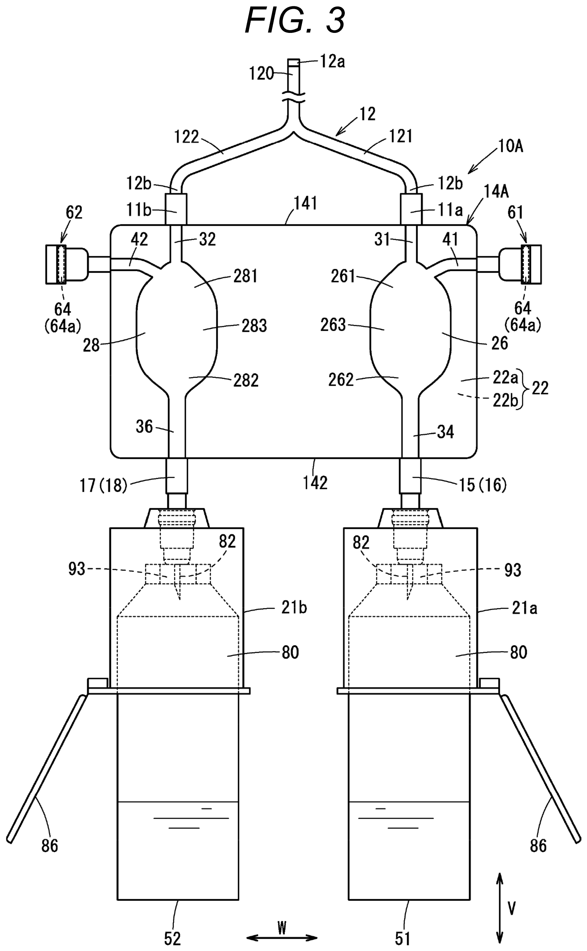

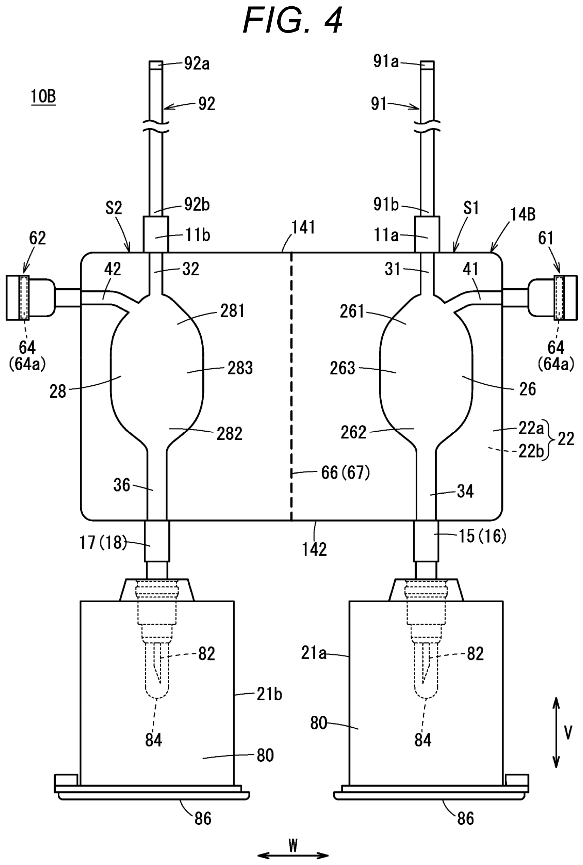

A collection kit 10A according to the present embodiment illustrated in Figs. 1 to 3 is used for transferring a blood preparation, which is a collection target, to sampling containers 51 and 52 (refer to Fig. 3). The collection target is, for example, a blood preparation such as a platelet preparation. The collection target may be a medicine other than the blood preparation. The collection target may be a liquid sample other than the medicine. A medical bag 56 (Fig. 2) may be a blood bag system for centrifugally separating blood containing a plurality of components into a plurality of components (for example, three components including a light specific gravity component, a medium specific gravity component, and a heavy specific gravity component, or two components including a light specific gravity component and a heavy specific gravity component) having different specific gravities, and separately housing and storing respective components in different bags. In this case, the collection kit 10A may be connected to the blood bag system. The collection kit 10A is typically used in a posture in which an up-down direction in Figs. 1 to 3 is in a vertical direction. Therefore, in the following description, in the collection kit 10A, the up-down direction (V direction) in Figs. 1 to 3 is also referred to as the "up-down direction", and a right-left direction (W direction) in Figs. 1 to 3 is also referred to as a "width direction". The definition regarding the direction described above is similar for a collection kit 10B (Figs. 4 to 7) described later.

The collection kit 10A is used, for example, in a culture test for confirming the safety of the blood preparation at a business place such as a blood center where the blood preparation is manufactured. In this case, the sampling containers 51 and 52 illustrated in Fig. 3 are culture bottles.

In the culture test, a test for anaerobic bacteria culture and a test for aerobic bacteria culture are performed. Therefore, in the culture test, two bottles including the sampling container 51 (hereinafter, also referred to as a "first sampling container 51") for anaerobic culture and the sampling container 52 (hereinafter, also referred to as a "second sampling container 52") for aerobic culture are used. The collection kit 10A is used for collecting a liquid sample (platelet preparation) and dispensing the same into the two sampling containers 51 and 52 by predetermined amounts.

Hereinafter, in the present embodiment, an example of using the platelet preparation as the blood preparation will be described, but the blood preparation collected by the collection kit 10A may be a red blood cell preparation, a plasma preparation, or a whole blood preparation.

As illustrated in Fig. 1, the collection kit 10A includes an inflow tube 12, a plurality of inflow ports (a first inflow port 11a and a second inflow port 11b), a collection bag 14A, a plurality of outflow ports (a first outflow port 15 and a second outflow port 17), and a plurality of adapters (a first adapter 21a and a second adapter 21b). The collection kit 10A further includes a plurality of exhaust units (a first exhaust unit 61 and a second exhaust unit 62).

The inflow tube 12 is, for example, a translucent medical tube made of a thermoplastic resin such as a vinyl chloride resin. The inflow tube 12 can be connected to or separated from another medical tube without exposing the inside thereof to outside air, for example, by an aseptic joining device, a tube sealer, or the like. The inflow tube 12 includes an upstream end 12a and a plurality of downstream ends 12b. The upstream end 12a of the inflow tube 12 is welded to be sealed in an initial state. In the first embodiment, the number of downstream ends 12b of the inflow tube 12 is two. The inflow tube 12 includes one common portion 120 to which the medical bag 56 (refer to Fig. 2) is connected, and a plurality of branch portions (a first branch portion 121 and a second branch portion 122) branched from the common portion 120. The inflow tube 12 is not present in the collection bag 14A. That is, the inflow tube 12 is not formed between flexible sheets 22a and 22b and is disposed outside the collection bag 14A.

The first inflow port 11a and the second inflow port 11b are inlets for introducing the collection target from the inflow tube 12 into the collection bag 14A. The first inflow port 11a and the second inflow port 11b protrude upward from an upper side 141 of the collection bag 14A. The downstream end 12b of the first branch portion 121 is connected to the first inflow port 11a. The downstream end 12b of the second branch portion 122 is connected to the second inflow port 11b.

The collection bag 14A includes two flexible sheets 22a and 22b stacked in a thickness direction. The two flexible sheets 22a and 22b are welded to be joined to each other in a plurality of welding portions. A sheet portion 22 including the two flexible sheets 22a and 22b has a rectangular shape. The collection bag 14A includes a plurality of inflow channels (a first inflow channel 31 and a second inflow channel 32), a plurality of housing chambers (a first housing chamber 26 and a second housing chamber 28), and a plurality of outflow channels (a first outflow channel 34 and a second outflow channel 36). The plurality of inflow channels, the plurality of housing chambers, and the plurality of outflow channels are defined by the welding portions.

The collection bag 14A may include three or more inflow channels, three or more housing chambers, and three or more outflow channels. The number of inflow channels, the number of housing chambers, and the number of outflow channels are the same. Since the plurality of inflow channels and the plurality of branch portions are in a correspondence relationship with each other (since one branch portion is provided for one inflow channel), in a case where the collection bag 14A includes three or more inflow channels, the number of branch portions of the inflow tube 12 is the same as the number of inflow channels.

In an initial state of the collection kit 10A, the first inflow channel 31, the second inflow channel 32, the first housing chamber 26, the second housing chamber 28, the first outflow channel 34, and the second outflow channel 36 swell in the thickness direction of the collection bag 14A. Therefore, the two flexible sheets 22a and 22b are separated from each other in the thickness direction in each portion of the first inflow channel 31, the second inflow channel 32, the first housing chamber 26, the second housing chamber 28, the first outflow channel 34, and the second outflow channel 36. Note that, the thickness direction of the collection bag 14A is a direction orthogonal to the up-down direction (V direction) and the width direction (W direction).

The first inflow channel 31 connects the first inflow port 11a and the first housing chamber 26 of the collection bag 14A. The first inflow channel 31 is connected to an upper end of the first housing chamber 26 of the collection bag 14A. The second inflow channel 32 connects the second inflow port 11b and the second housing chamber 28 of the collection bag 14A. The second inflow channel 32 is connected to an upper end of the second housing chamber 28 of the collection bag 14A. Note that, as indicated by virtual lines in Fig. 1, the first inflow channel 31 may be connected to a lower portion 262 of the first housing chamber 26, and the second inflow channel 32 may be connected to a lower portion 282 of the second housing chamber 28.

The first housing chamber 26 is a housing region for temporarily accumulating the platelet preparation in order to transfer the platelet preparation to the first sampling container 51. In the initial state of the collection kit 10A, the first housing chamber 26 swells in the thickness direction of the collection bag 14A, and air exists in the first housing chamber 26. The first housing chamber 26 has a volume for housing a predetermined amount (for example, about 8 mL to about 10 mL) of the platelet preparation.

An upper portion 261 of the first housing chamber 26 has a substantially triangular shape, a width of which gradually decreases upward. The first inflow channel 31 is connected to the upper end of the upper portion 261. The lower portion 262 of the first housing chamber 26 has a substantially triangular shape, a width of which gradually decreases downward. An intermediate portion 263 of the first housing chamber 26 is located between the upper portion 261 and the lower portion 262, and has a constant width in the up-down direction.

The first outflow channel 34 is connected to a lower end of the first housing chamber 26 (a lower end of the lower portion 262). The first outflow channel 34 extends downward from the lower end of the first housing chamber 26. The first outflow channel 34 is a channel for transferring the collection target toward the first sampling container 51.

The second housing chamber 28 is a housing region for temporarily accumulating the platelet preparation in order to transfer the platelet preparation to the second sampling container 52. In the initial state of the collection kit 10A, the second housing chamber 28 swells in the thickness direction of the collection bag 14A, and air exists in the second housing chamber 28. The second housing chamber 28 has the same shape as that of the first housing chamber 26 and has a volume for housing a predetermined amount (for example, about 8 mL to about 10 mL) of the platelet preparation, the same amount as that of the first housing chamber 26. Note that, the volume of the first housing chamber 26 and the volume of the second housing chamber 28 may be different from each other.

An upper portion 281 of the second housing chamber 28 has a substantially triangular shape, a width of which gradually decreases upward. The lower portion 282 of the second housing chamber 28 has a substantially triangular shape, a width of which gradually decreases downward. An intermediate portion 283 of the second housing chamber 28 is located between the upper portion 281 and the lower portion 282, and has a constant width in the up-down direction.

The second outflow channel 36 is connected to a lower end of the second housing chamber 28. The second outflow channel 36 extends downward from the lower end of the second housing chamber 28. The second outflow channel 36 is a channel for transferring the collection target toward the second sampling container 52.

When the collection target flows into the first housing chamber 26, the first exhaust unit 61 discharges air from the first housing chamber 26 to the outside of the collection bag 14A. The collection bag 14A includes a first exhaust channel 41 connected to the upper portion 261 of the first housing chamber 26. The first exhaust channel 41 is formed between the flexible sheets 22a and 22b. The first exhaust unit 61 is connected to the first exhaust channel 41. The first exhaust unit 61 includes a filter 64.

The filter 64 has a function of allowing passage of gas and blocking passage of liquid. In the first embodiment, the filter 64 is a hydrophilic filter 64a. The hydrophilic filter 64a allows passage of gas before being wetted with liquid and blocks passage of gas after being wetted with liquid. As the first housing chamber 26 is filled with the collection target, when the hydrophilic filter 64a comes into contact with the collection target, pores of the hydrophilic filter 64a are blocked by liquid forming the collection target, and thereafter, the first exhaust unit 61 blocks the passage of gas and liquid.

When the collection target flows into the second housing chamber 28, the second exhaust unit 62 discharges air from the second housing chamber 28 to the outside of the collection bag 14A. The collection bag 14A includes a second exhaust channel 42 connected to the upper portion 281 of the second housing chamber 28. The second exhaust channel 42 is formed between the flexible sheets 22a and 22b. The second exhaust unit 62 is connected to the second exhaust channel 42. The second exhaust unit 62 includes the filter 64 (hydrophilic filter 64a).

Note that, since the plurality of housing chambers and the plurality of exhaust units are in a correspondence relationship with each other (since one exhaust unit is provided for one housing chamber), in a case where the collection bag 14A includes three or more housing chambers, the number of exhaust units is the same as the number of housing chambers. As another aspect of the first exhaust unit 61, the filter 64 may be disposed in a wall portion forming the first housing chamber 26. As another aspect of the second exhaust unit 62, the filter 64 may be disposed in a wall portion forming the second housing chamber 28.

In Fig. 1, the first outflow port 15 is connected to the first outflow channel 34. The first outflow port 15 is a channel member for transferring the collection target from the first housing chamber 26 toward the first sampling container 51 (refer to Fig. 3). The first adapter 21a is connected to the first outflow port 15. The first outflow port 15 protrudes from a lower side 142 of the collection bag 14A.

The first outflow port 15 functions as a first sealing member 16. The first sealing member 16 seals the first outflow channel 34 in an initial state to block the passage of fluid between the first housing chamber 26 and the first adapter 21a. The first sealing member 16 is a cylindrical member including a breakable plug therein, and when an operation of bending the plug is performed in the initial state, the plug is broken, and an inner channel can be opened.

The second outflow port 17 is connected to the second outflow channel 36. The second outflow port 17 is a channel member for transferring the collection target from the second housing chamber 28 toward the second sampling container 52 (refer to Fig. 3). The second adapter 21b is connected to the second outflow port 17. The second outflow port 17 protrudes from the lower side 142 of the collection bag 14A.

The second outflow port 17 functions as a second sealing member 18. The second sealing member 18 also is a member similar to the first sealing member 16, and seals the second outflow channel 36 in an initial state to block the passage of fluid between the second housing chamber 28 and the second adapter 21b.

The first adapter 21a includes a housing cylinder 80 capable of housing a neck portion of the first sampling container 51, a tubular needle portion 82 disposed inside the housing cylinder 80, and a rubber cover 84 covering the needle portion 82. The housing cylinder 80 includes a lid 86 that can be opened and closed. A release sheet may be adopted in place of the lid 86.

The needle portion 82 can puncture a rubber stopper 93 (refer to Fig. 3) of the first sampling container 51. When the needle portion 82 of the first adapter 21a penetrates the rubber stopper 93 of the first sampling container 51 and the first sealing member 16 is opened, the first sampling container 51 and the first housing chamber 26 communicate with each other. When the needle portion 82 punctures the rubber stopper 93 of the first sampling container 51, the rubber cover 84 is pushed toward a proximal end side, and the needle portion 82 penetrates the rubber cover 84. When the needle portion 82 comes out of the rubber stopper 93 of the first sampling container 51, the rubber cover 84 extends by its elastic restoring force to cover the needle portion 82 again.

The second adapter 21b has the configuration similar to that of the first adapter 21a. When the needle portion 82 of the second adapter 21b penetrates the rubber stopper 93 of the second sampling container 52 and the second sealing member 18 is opened, the second sampling container 52 and the second housing chamber 28 communicate with each other.

Note that, in a case where the collection bag 14A includes three or more housing chambers, the collection kit 10A includes three or more outflow ports and three or more adapters corresponding to the respective housing chambers.

In the initial state of the collection kit 10A, the collection kit 10A is not required to be provided with the first adapter 21a and the second adapter 21b. In this case, when the collection kit 10A is used, the first adapter 21a and the second adapter 21b are connected to the collection kit 10A. For example, the first adapter 21a includes an engagement claw and a connection needle, and a lower portion of the first outflow port 15 includes an engagement groove and a rubber stopper. The connection needle punctures the rubber stopper, and the engagement claw engages with the engagement groove, so that the first adapter 21a and the first outflow port 15 are connected. The second adapter 21b has a connection structure similar to that of the first adapter 21a.

The collection kit 10A configured as described above is used as follows. In the first embodiment, a collection method of dispensing the platelet preparation into the two sampling containers 51 and 52 (refer to Fig. 3) using the collection kit 10A will be described taking a case where the collection target is the platelet preparation as an example.

As illustrated in Fig. 2, a platelet bag 57, which is an aspect of the medical bag 56 containing the collection target, is joined to the collection kit 10A. The platelet bag 57 includes a tube 58 for connection. The tube 58 is joined to the inflow tube 12. The tube 58 is joined to the inflow tube 12 without coming into contact with outside air using the aseptic joining device.

Next, the platelet preparation is introduced into the collection bag 14A. At this step, the platelet bag 57 is disposed above the collection bag 14A. The first sealing member 16 and the second sealing member 18 of the collection kit 10A are maintained in a closed state.

The platelet preparation flows out of the platelet bag 57 by gravity and flows into the common portion 120 of the inflow tube 12. The platelet preparation is divided into the first branch portion 121 and the second branch portion 122 at a downstream end of the common portion 120, and flows into the collection bag 14A. Therefore, the platelet preparation that has passed through the first branch portion 121 flows into the collection bag 14A via the first inflow port 11a, and the platelet preparation that has passed through the second branch portion 122 flows into the collection bag 14A via the second inflow port 11b.

The platelet preparation flowing into the collection bag 14A via the first inflow port 11a flows into the first housing chamber 26 via the first inflow channel 31. The platelet preparation is accumulated in the first housing chamber 26, and a liquid level of the platelet preparation in the first housing chamber 26 rises. The air inside the first housing chamber 26 is pushed up by the platelet preparation and is discharged from the first exhaust unit 61 via the first exhaust channel 41.

When the first housing chamber 26 is filled with the platelet preparation and the filter 64 of the first exhaust unit 61 comes into contact with the platelet preparation to wet the filter 64, the filter 64 is closed, and the inflow of the platelet preparation into the first housing chamber 26 is stopped. As a result, the introduction of the platelet preparation into the first housing chamber 26 is completed. A predetermined amount (for example, about 8 mL to 10 mL) of the platelet preparation is housed in the first housing chamber 26.

In contrast, the platelet preparation flowing into the collection bag 14A via the second inflow port 11b flows into the second housing chamber 28 via the second inflow channel 32. The platelet preparation is accumulated in the second housing chamber 28, and a liquid level of the platelet preparation in the second housing chamber 28 rises. The air inside the second housing chamber 28 is pushed up by the platelet preparation and is discharged from the second exhaust unit 62 via the second exhaust channel 42.

When the second housing chamber 28 is filled with the platelet preparation and the filter 64 of the second exhaust unit 62 comes into contact with the platelet preparation to wet the filter 64, the filter 64 is closed, and the inflow of the platelet preparation into the second housing chamber 28 is stopped. As a result, the introduction of the platelet preparation into the second housing chamber 28 is completed. A predetermined amount (for example, about 8 mL to 10 mL) of the platelet preparation is housed in the second housing chamber 28.

Thereafter, the platelet bag 57 is separated from the inflow tube 12 by a tube sealer (high-frequency sealer or ultrasonic sealer) or the like. The tube sealer separates the inflow tube 12 from the tube 58 of the platelet bag 57, and at the same time, seals the upstream end 12a of the inflow tube 12 by welding. The inflow tube 12 and the tube 58 are separated from each other without exposing inner channels to outside air. The separated platelet bag 57 is stored until a culture test is completed, and then used.

In contrast, the collection kit 10A filled with the platelet preparation is carried into a clean bench. Next, as illustrated in Fig. 3, an operation for transferring the platelet preparation from the collection kit 10A to the first sampling container 51 and the second sampling container 52 (connecting step and opening step) is performed.

At the connecting step, the first sampling container 51 is connected to the first adapter 21a, and the second sampling container 52 is connected to the second adapter 21b. The needle portion 82 of the first adapter 21a penetrates the rubber stopper 93 of the first sampling container 51, and the needle portion 82 of the second adapter 21b penetrates the rubber stopper 93 of the second sampling container 52.

Thereafter, when the opening operation of the first sealing member 16 is performed at the opening step, the platelet preparation in the first housing chamber 26 is sucked by a negative pressure of the first sampling container 51 and flows into the first sampling container 51 via the first outflow channel 34 and the first outflow port 15 (first sealing member 16). As a result, a predetermined amount of the platelet preparation is introduced into the first sampling container 51. When the opening operation of the second sealing member 18 is performed at the opening step, the platelet preparation in the second housing chamber 28 is sucked by a negative pressure of the second sampling container 52 and flows into the second sampling container 52 via the second outflow channel 36 and the second outflow port 17 (second sealing member 18). As a result, a predetermined amount of the platelet preparation is introduced into the second sampling container 52.

As a result, substantially the entire amount of the platelet preparation accumulated in the first housing chamber 26 is transferred to the first sampling container 51, and substantially the entire amount of the platelet preparation accumulated in the second housing chamber 28 is transferred to the second sampling container 52.

Through the above steps, the collection of the collection target (platelet preparation) using the collection kit 10A is completed.

Note that, when collecting the collection target using the collection kit 10A, a jig (collection kit jig) for connecting the collection kit 10A to the first sampling container 51 and the second sampling container 52 may be used. The collection kit jig includes, for example, a kit holding unit that holds the collection kit 10A, a lifting mechanism that displaces the kit holding unit in the up-down direction, and a bottle holding unit that holds the first sampling container 51 and the second sampling container 52. The collection kit 10A can be connected to the first sampling container 51 and the second sampling container 52 by lowering the kit holding unit that holds the collection kit 10A. In place of the lifting mechanism that displaces the kit holding unit in the up-down direction, a lifting mechanism that lifts the bottle holding unit up and down may be provided.

The first embodiment has the following effects.

The collection kit 10A has a structure in which the collection bag 14A is integrally formed using the two flexible sheets 22a and 22b, so that this can be manufactured at a low cost. The number of times of joining and separation between the tubes can be minimized, so that work efficiency is excellent. Furthermore, since it is not necessary to perform work of measuring and taking the collection target with the eye according to a scale line, work becomes easy and a measurement error can be reduced.

The collection bag 14A includes the first housing chamber 26 and the second housing chamber 28, and a predetermined amount (required amount) of the collection target can be accumulated in the first housing chamber 26 and the second housing chamber 28, so that a predetermined amount of the collection target can be collected in each of the first sampling container 51 and the second sampling container 52. Therefore, the collection kit 10A can suppress a variation in amount of the collection target introduced into each of the first sampling container 51 and the second sampling container 52.

In the collection kit 10A, the number of the plurality of inflow ports, the number of the plurality of housing chambers, and the number of the plurality of outflow ports are the same. Specifically, in the first embodiment, the collection kit 10A includes two inflow ports (the first inflow port 11a and the second inflow port 11b), two housing chambers (the first housing chamber 26 and the second housing chamber 28), and two outflow ports (the first outflow port 15 and the second outflow port 17). In this configuration, since a connection channel connecting the first housing chamber 26 and the second housing chamber 28 to each other is not formed in the collection bag 14A, it is possible to avoid the configuration of the collection bag 14A from being complicated. In a case where the connection channel is formed, a step of closing the connection channel (closing step) is required in order to block movement of the collection target between the first housing chamber 26 and the second housing chamber 28. In contrast, since the collection kit 10A includes the first housing chamber 26 and the second housing chamber 28 independent from each other, the closing step as described above is unnecessary.

Since the collection kit 10A includes the plurality of adapters (the first adapter 21a and the second adapter 21b) in the initial state, it is possible to save time and effort of connecting the plurality of adapters when using the collection kit 10A, and collection work can be efficiently performed.

The inflow tube 12 includes one common portion 120 to which the medical bag 56 is connected, and a plurality of branch portions (the first branch portion 121 and the second branch portion 122) branched from the common portion 120 to be connected to the plurality of inflow ports, respectively. With this configuration, when the collection target is transferred from the medical bag 56 to the collection bag 14A, connection and separation between the medical bag 56 and the inflow tube 12 only need to be performed once, so that the collection work can be efficiently performed.

Next, a collection kit 10B according to a second embodiment will be described with reference to Figs. 4 to 8.

The collection kit 10B according to the second embodiment includes a plurality of inflow tubes connected to a plurality of inflow ports, respectively. Since the number of inflow tubes in the second embodiment is two, they are hereinafter referred to as a "first inflow tube 91" and a "second inflow tube 92", respectively. An upstream end 91a of the first inflow tube 91 is welded to be sealed in an initial state. A downstream end 91b of the first inflow tube 91 is connected to the first inflow port 11a. An upstream end 92a of the second inflow tube 92 is welded to be sealed in an initial state. A downstream end 92b of the second inflow tube 92 is connected to the second inflow port 11b.

The collection bag 14B of the collection kit 10B is different from the collection bag 14A illustrated in Fig. 1 in that this includes a fragile portion 66 and a plurality of segments divided by the fragile portion 66. Since the number of segments in the collection bag 14B illustrated in Fig. 4 is two, they are hereinafter referred to as a "first segment S1" and a "second segment S2", respectively. The first segment S1 includes the first housing chamber 26. The second segment S2 includes the second housing chamber 28.

The fragile portion 66 extends in the up-down direction from the upper side 141 to the lower side 142 of the collection bag 14B. Therefore, the fragile portion 66 divides the collection bag 14B into right and left regions. The fragile portion 66 is a structural portion for making the first segment S1 and the second segment S2 separable from each other. The fragile portion 66 has lower strength than other structural portions of the collection bag 14B and is easily broken. In the second embodiment, the fragile portion 66 is a perforation 67. The fragile portion 66 may be a thin portion.

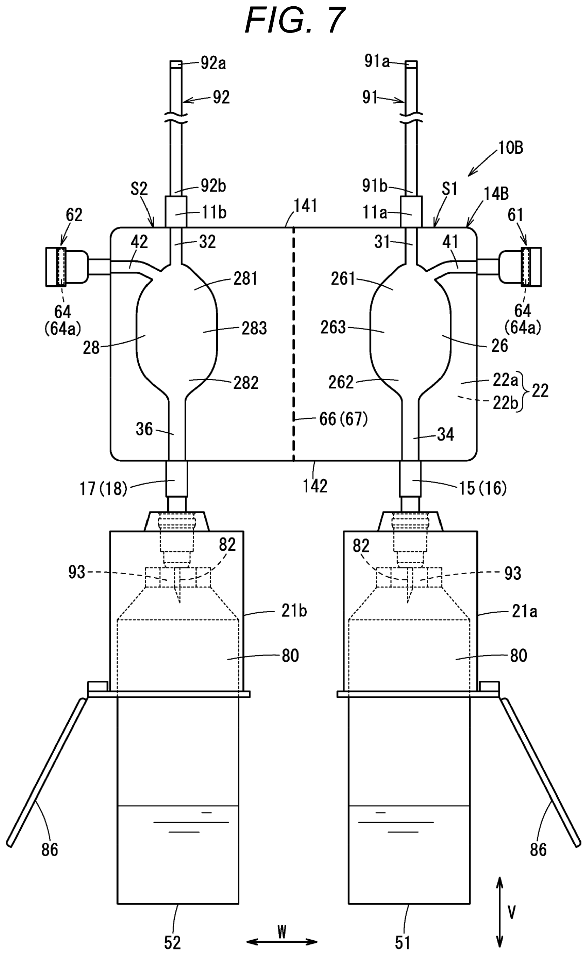

The collection kit 10B configured as described above is used as follows. In the second embodiment, a collection method of dispensing the platelet preparation into the two sampling containers 51 and 52 (refer to Fig. 7) using the collection kit 10B will be described taking a case where the collection target is the platelet preparation as an example.

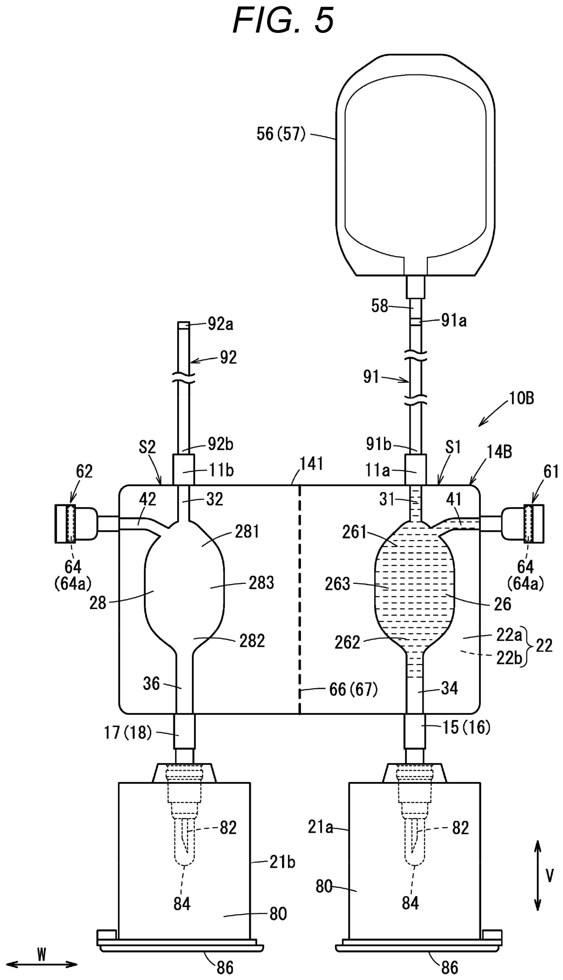

As illustrated in Fig. 5, the tube 58 of the platelet bag 57 is joined to the first inflow tube 91 of the collection kit 10B. The tube 58 is joined to the first inflow tube 91 without coming into contact with outside air using the aseptic joining device.

Next, the platelet preparation is introduced into the first housing chamber 26 of the collection bag 14B. At this step, the platelet bag 57 is disposed above the collection bag 14B. The first sealing member 16 of the collection kit 10B is maintained in a closed state.

The platelet preparation flows out of the platelet bag 57 by gravity, flows into the first inflow channel 31 via the first inflow tube 91 and the first inflow port 11a, and flows into the first housing chamber 26. Thereafter, similarly to the collection method described with reference to Fig. 2, air is discharged from the first housing chamber 26 via the first exhaust unit 61, and the first housing chamber 26 is filled with the platelet preparation.

Thereafter, the platelet bag 57 is separated from the first inflow tube 91 by a tube sealer (high-frequency sealer or ultrasonic sealer) or the like.

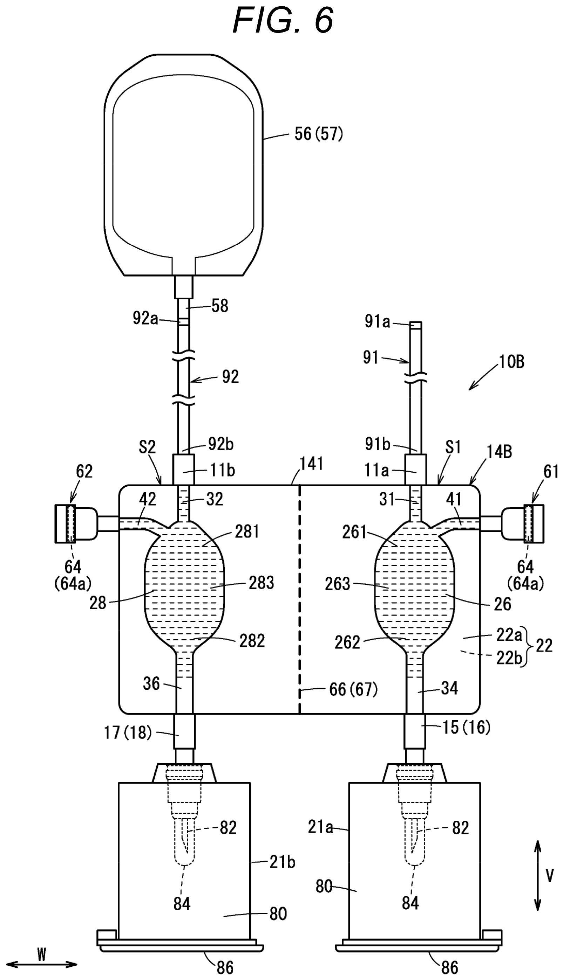

Next, as illustrated in Fig. 6, the tube 58 of the platelet bag 57 is joined to the second inflow tube 92. The tube 58 is joined to the second inflow tube 92 without coming into contact with outside air using the aseptic joining device.

Next, the platelet preparation is introduced into the second housing chamber 28 of the collection bag 14B. At this step, the platelet bag 57 is disposed above the collection bag 14B. The second sealing member 18 of the collection kit 10B is maintained in a closed state.

The platelet preparation flows out of the platelet bag 57 by gravity, flows into the second inflow channel 32 via the second inflow tube 92 and the second inflow port 11b, and flows into the second housing chamber 28. Thereafter, similarly to the collection method described with reference to Fig. 2, air is discharged from the second housing chamber 28 via the second exhaust unit 62, and the second housing chamber 28 is filled with the platelet preparation.

Thereafter, the platelet bag 57 is separated from the second inflow tube 92 by a tube sealer (high-frequency sealer or ultrasonic sealer) or the like. The separated platelet bag 57 is stored until a culture test is completed, and then used. Contrary to the above-described procedure, a step of introducing the platelet preparation into the second housing chamber 28 may be performed, and then a step of introducing the platelet preparation into the first housing chamber 26 may be performed.

In contrast, the collection kit 10B filled with the platelet preparation is carried into a clean bench. Next, as illustrated in Fig. 7, an operation for transferring the platelet preparation from the collection kit 10B to the first sampling container 51 and the second sampling container 52 (connecting step and opening step) is performed. The connecting step and the opening step are similar to the connecting step and the opening step described with reference to Fig. 3.

Through the above steps, the collection of the platelet preparation using the collection kit 10B is completed.

Note that, when collecting the platelet preparation using the collection kit 10B, a jig (collection kit jig) for connecting the collection kit 10B to the first sampling container 51 and the second sampling container 52 may be used.

The collection kit 10B according to the second embodiment has the following effects.

The collection kit 10B includes a plurality of inflow tubes (the first inflow tube 91 and the second inflow tube 92) connected to a plurality of inflow ports (the first inflow port 11a and the second inflow port 11b), respectively. With this configuration also, the collection target can be transferred from the medical bag 56 to the plurality of housing chambers of the collection bag 14B, and a predetermined amount of the collection target can be accumulated in the plurality of housing chambers.

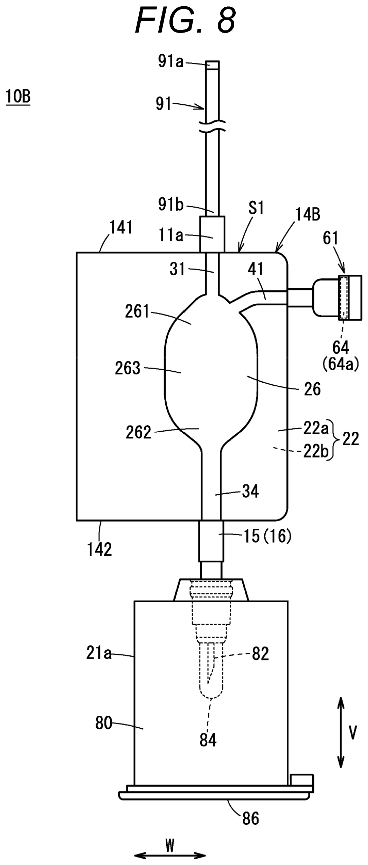

The collection bag 14B includes a plurality of segments (the first segment S1 and the second segment S2) each including a plurality of housing chambers. The plurality of segments is separable from each other. With this configuration, since the collection bag 14B can be divided into a plurality of segments, it is possible to use only a necessary number of segments in a case where it is desired to collect the collection target in a smaller number of sampling containers than the number of housing chambers. For example, in a case where one more sample is desired for an additional culture test after the collection target is collected in two sampling containers, as illustrated in Fig. 8, the first segment S1 can be separated from the second segment S2, and then the collection target can be collected using only the first segment S1.

Note that, the first segment S1 may be separated from the second segment S2 after collection of the collection target in the collection bag 14B illustrated in Fig. 7. In this case, specifically, the collection target is collected in the first segment S1 of the collection bag 14B before being separated into the first segment S1 and the second segment S2. Next, the first segment S1 is separated from the second segment S2. Next, the sampling container is connected to the adapter (first adapter 21a) connected to the first segment S1, and the collection target is transferred to the sampling container.

In the second embodiment, the same or similar functions and effects as those of the first embodiment can be obtained for a part common to the first embodiment.

Note that, the present invention is not limited to the above disclosure and can take various configurations without departing from the gist of the present invention.

## Claims

1. A collection kit for collecting a collection target housed in a medical bag into a plurality of sampling containers, the collection kit comprising:
at least one inflow tube to which the medical bag is connected;
a plurality of inflow ports connected downstream of the at least one inflow tube;
a collection bag connected downstream of the plurality of inflow ports, formed by stacking and welding two flexible sheets, with a plurality of housing chambers that houses the collection target formed between the two flexible sheets;
a plurality of outflow ports connected to the plurality of housing chambers, respectively, that transfers the collection target from the plurality of housing chambers to the plurality of sampling containers, respectively; and
a plurality of exhaust units connected to the plurality of housing chambers, respectively, for discharging air inside the plurality of housing chambers to an outside of the collection bag, wherein
the number of the plurality of inflow ports, the number of the plurality of housing chambers, and the number of the plurality of outflow ports are the same.

2. The collection kit according to claim 1, further comprising:
a plurality of adapters connected downstream of the plurality of outflow ports, respectively, and connectable to the plurality of sampling containers.

3. The collection kit according to claim 1 or 2, wherein
the at least one inflow tube includes one common portion to which the medical bag is connected, and a plurality of branch portions branched from the common portion and connected to the plurality of inflow ports, respectively.

4. The collection kit according to claim 1 or 2, wherein
the at least one inflow tube includes a plurality of inflow tubes connected to the plurality of inflow ports, respectively.

5. The collection kit according to claim 4, wherein
the collection bag includes a plurality of segments each including the plurality of housing chambers, and
the plurality of segments is separable from each other.

6. The collection kit according to claim 1 or 2, wherein
the at least one inflow tube is disposed outside the collection bag.
